# EUROPEAN PATENT APPLICATION

(11) **EP 3 316 195 A1**
(43) Date of publication of application: **02.05.2018**
(21) Application number: 17170892.8
(22) Date of filing: 12.05.2017
(51) Int. Cl.: G06Q 10/06

(54) **IMPROVED CHECK-IN KIOSK AND SYSTEM**

(30) Priority: 01.11.2016 HK 16112551
(71) Applicant: Airport Authority, Lantau (HK)
(72) Inventor: WONG, Alice C.F., Lantau (HK)
(74) Representative: Noble, Nicholas

(57) **Abstract**

There is provided a passenger check-in kiosk, system for passenger departure management operable by any one of a plurality of carriers.

The kiosk comprises a processor of a computing device configured for execution of an operating system and for controlling at least one of a plurality of authorised peripheral devices. Upon selection of one carrier from the plurality of carriers, the processor is configured to provide an interface for communication with a corresponding carrier application executing on a device remote from the passenger check-in kiosk. The kiosk also comprises a memory for storing parameters for operating the authorised peripheral devices and operating system.

## Description

### TECHNICAL FIELD

The present disclosure relates to an improved check-in kiosk and system for the management of passenger travel.

### BACKGROUND

In the relatively rare exclusive use airport/airline model, each individual airline deployed and managed their own staff, counters, boarding gates and IT systems in an airport terminal, paying the airport on the numbers of gates etc. exclusively leased to that airline. Against the background of seasonality of passenger travel schedules, with inevitable peaks and troughs; this model has proved somewhat inflexible and dated.

As a way of managing variation in passenger numbers, airports and airlines have adopted a range of approaches. These approaches range from exclusive use, mixed use, preferential use and a full Common Use approach with Common Use Terminal Equipment (CUTE) or its successor Common Use Passenger Processing (CUPPS).

Typically these models shift responsibility for various infrastructure from the airlines back to airports, who have responsibility for hosting and maintaining servers upon which certified and approved applications such as the Departure Control Systems (DCS) operate. Particularly where multiple applications from different airlines were operating on the same server, to ensure that these applications would not interact with each other, or compromise the security of the overall environment in some way, third party external service providers certified and approved all applications, updates, and infrastructure used in such systems.

However, as transportation providers handle an increasing number of passengers, with increasingly complex multi leg routes and with more demanding passenger expectations, there is an emphasis on increasing efficiency but at the same time delivering an improved customer experience. Common use equipment is struggling to meet these requirements, with airlines also concerned with the loss of autonomy, costs complexity and time taken in maintenance and upgrading for this equipment.

It is an object of the present disclosure to provide a method and system which addresses at least some of the above failings and deficiencies or at least provides a useful alternative.

### SUMMARY

In an aspect of the present invention there is provided a passenger check-in kiosk operable by any one of a plurality of carriers, the kiosk comprising:
a processor of a computing device configured for execution of an operating system and for controlling at least one of a plurality of authorised peripheral devices;
wherein upon selection of any one carrier from the plurality of carriers, the processor is configured to provide an interface for communication with the corresponding carrier application executing on a device remote from the passenger check-in kiosk; and
a memory for storing parameters for operation of the authorised peripheral devices and operating system.

Advantageously, the passenger check in kiosk may mobile.

Optionally the communication may be across a wireless network, which may be encrypted. A secure communication channel may be established across an unsecured public network. Optionally, the secure communication channel may be established using SSL encryption.

The kiosk may further comprise a communications interface for communication with a centralised terminal management server. Operational statistics of the authorised peripheral devices may be transmitted to the centralised terminal management server.

The authorised peripheral device may be selected from the group comprising a baggage tag printer, a bar code reader, a passport scanner, a magnetic card reader and a boarding pass printer.

The processor of the kiosk may be configured to receive passenger information and initiate a connection with an authorised server for confirming the passenger's travel clearance. Optionally, the authorised server for confirming the passenger clearance confirms the visa requirements of the passenger based upon the country of origin of a provided passenger travel document and the passenger destination.

The processor may be configured to display indicia representing a carrier brand corresponding to the passenger booking information.

The kiosk may be operable by a passenger or by an authorised agent.

The memory store may be configured to store a standard operating system selected from the group comprising Windows®, Linux, Mac OS and UNIX.

The processor may be configured to operate an authenticated maintenance application for providing maintenance, testing and diagnostic functions to an authorised user. Optionally the processor is configured to store memory data for error logging, settings management and application services for at least one of the authorised peripheral devices.

The interface may be configured to establish communication with a corresponding remote default carrier application and is configurable by any of the plurality of carriers.

Optionally, an authorised agent may perform the selection of one carrier from a plurality of carriers. The kiosk may be connectable to one or more power sources comprising an on-board battery, and an external power network.

The kiosk may further comprise a peripherals communication interface connected to the authorised peripheral devices for intermediating communication between the authorised peripheral devices and the corresponding carrier application.

The kiosk may further comprise a peripherals communication interface connected to the authorised peripheral devices for control of the authorised peripheral devices by the corresponding carrier application.

In a further aspect of the disclosure, there is provided a passenger management system operable on a server located remote from a plurality of passenger check-in kiosks, the system comprising:
a communications interface configured for providing communication across one or more open networks with the passenger check-in kiosks,
a processor configured for executing a default passenger check in application and selected customisation parameters wherein upon receiving from a passenger check in kiosk via the communications interface data identifying a passenger or passenger booking and verification of passenger booking information, the processor is configured to transmit authorisation to the remote passenger check-in kiosk via the communications interface for printing of a boarding pass or bag tag.

The system may be configured for communication with passenger check-in kiosks operable at a plurality of locations remote from each other and from the passenger departure management system.

The communication may occur across a wireless network. The communications interface may be arranged to establish an encrypted wireless communication channel with the remote passenger check-in kiosk. The secure communication channel may be established across an unsecured public network, optionally using SSL encryption.

The communications interface may be configured for receiving updates from a centralised kiosk management server. Upon receiving data from the kiosk, a connection may be initiated with an authorised server for confirming the passenger's travel clearance.

Advantageously, the authorised server for confirming the passenger clearance is configured to confirm the visa requirements of the passenger based upon the country of origin of the passenger travel document and passenger destination information provided.

The passenger management system may be configured to establish a connection for communication between the authorised peripheral devices and the corresponding carrier application, said connection being established through a communications interface of the kiosk and via a peripheral communications interface of the kiosk.

In still a further aspect of the disclosure, there is provided a system for managing check-in operations for a plurality of passengers of a plurality of carriers departing from a transportation facility, the system comprising:
at least one kiosk operable by any of a plurality of carriers, the kiosk comprising a processor of a computing device configured for execution of an operating system and controlling at least one of a plurality of authorised peripheral devices; wherein upon selection of one carrier from the plurality of carriers, the processor is configured to provide an interface for communication with a corresponding carrier application executing on a device remote from the passenger check-in kiosk; and a memory for storing parameters for operation of the authorised peripheral devices and the operating system;
one or more computing devices including processors configured for receiving from a passenger check in kiosk data identifying a passenger or passenger booking located remotely from the kiosk, wherein the processors are configured such that upon verification of the provided passenger data against passenger booking information at the remote carrier application, authorisation is transmitted to the remote passenger check in kiosk for printing of at least one of a boarding pass or bag tag. Optionally, the communication occurs across a wireless network.

Advantageously the communications interface is configured for receiving updates from a centralised kiosk management server.

Upon receiving data from the kiosk, a connection may be initiated with an authorisation server for confirming the passenger's travel clearance.

The authorised server for confirming the passenger clearance is configured to confirm the visa requirements of the passenger based upon the country of origin of the passenger travel document and passenger destination information provided.

Advantageously the system is configured communicate between the authorised peripheral devices and the corresponding carrier application, via a connection established through a communications interface and through a peripheral communications interface of the kiosk.

### BRIEF DESCRIPTION OF THE FIGURES

Preferred embodiments of the present disclosure will be explained in further detail below by way of example only and with reference to the accompanying drawings, in which:-
Fig 1 is a schematic diagram of the prior art deployment approach for common use infrastructure.
Fig 2 is a high level schematic diagram in accordance with an embodiment of the present disclosure.
Fig 3a is a schematic diagram of an exemplary kiosk arrangement according to an embodiment of the present disclosure.
Fig 3b is a schematic diagram of an exemplary arrangement for the peripheral management function provided by an embodiment of the present disclosure.
Fig 4 is an exemplary screen view of a typical application GUI which may be provided according to one of the above embodiments.

### DETAILED DESCRIPTION OF THE PREFERRED EMBODIMENTS

The systems and methods for facilitation of common use airport terminal equipment are now described, however, the methods and systems of the present disclosure are not limited to facilitating common use airport terminal equipment, and could be used in other passenger service locations without departing from the present disclosure. Moreover it would be appreciated that the methods and systems described herein are merely exemplary and various modifications may be made without departing from the scope of the present disclosure.

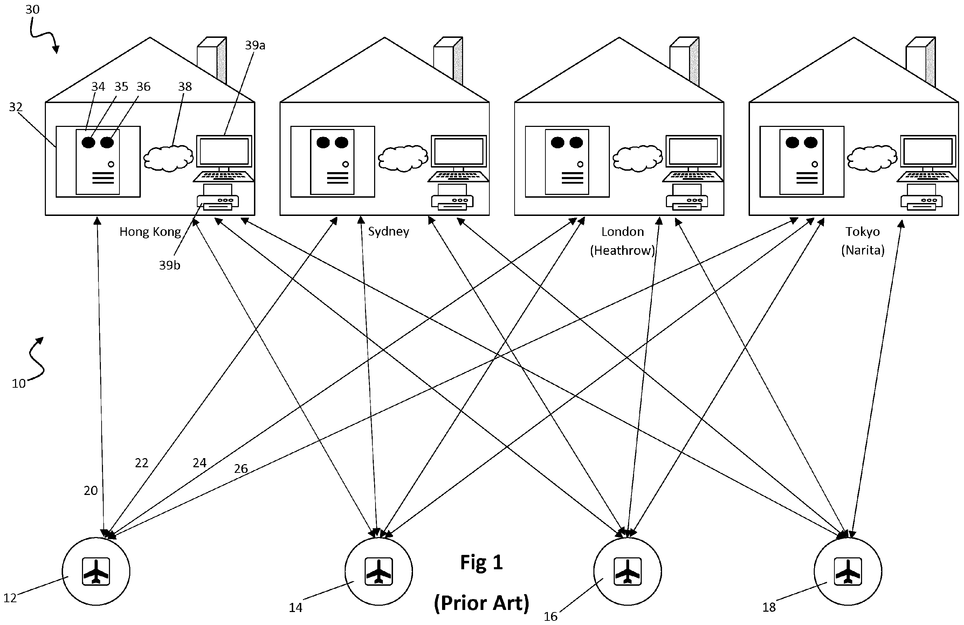

Referring now to the exemplary and prior art embodiment of one deployment approach for equipment depicted in Fig 1, there is depicted a network **10**, comprising carriers, communication channels and airport server facilities.

In particular, there is depicted a plurality of airline carriers **12**, **14**, **16**, **18**. Each of the carriers have a plurality of network communication channels established with servers at a plurality of airport destinations, these communication channels being represented by the arrows.

By way of example, the first carrier **12** has a network communication channel **20** with the servers at the Hong Kong Airport, a network communication channel **22** with the Sydney Airport, a network communication channel **24** with the London Airport and a network communication channel 26 with the Tokyo Airports shown. It would of course be appreciated that the embodiment depicted is merely exemplary, and a number of different other arrangements are possible, including different links and geographic locations would be possible without departing from the typical prior art embodiment.

These communication channels shown are established between a computer system at the carrier and a passenger management system / check-in system operable at the airport.

As would be appreciated by persons skilled in the art, the computer system operated by the carrier (not shown in detail) is configured to receive via various channels booking requests and amendments. These channels include by telephone discussions with customers, via communications established with travel agents, and via internet and mobile device bookings.

At the airport physical location themselves, exemplary implementations of the computer systems implemented are depicted. Again it would be appreciated that different arrangements are possible in the typical prior art arrangement of terminal systems.

In the Fig. 1 shown one exemplary airport **130** (in this case Hong Kong) has a server room containing one or more servers **34**.

An application **35** from a first carrier has been certified and approved for operation on the server **34** and is represented by a first black dot shown in the Figure. This application is configured to assist with the operation of equipment for providing departure control and baggage drop systems for carrier **1**. This application may be downloaded as required by a representative of carrier **1** who may be operating one or more of the plurality of terminals **39a** at a particular point in time. Alternatively or in addition, this application on the server may be configured to establish a network communication and provide booking related services together with another application hosted on the plurality of terminals **39a** across the fixed network **38**.

These terminals are generally configured to be operated only by agents assisting passengers of carrier **1**, and not by passengers of carrier **1**.

Also operable and also certified for operation on the airport server **34** is an application **36** from a second carrier. This application is able to operate on the server to respond to requests with the booking information of the second carrier from terminals **39a**. Alternatively, or additionally, the application may be downloaded as required by carrier **2** who may be operating the plurality of terminals **39a** at a particular point in time.

Not shown but equally applicable would be other applications which could also operate on the server **34** and provide communication between the respective carrier booking information systems and the plurality of terminals **39a** in the airport, or which may also be downloaded to the plurality of terminals **39a.**

The plurality of terminals **39a** are operable to communicate with common use peripherals such as network printers, depicted by **39b**.

It would be appreciated that similar arrangements are depicted in the systems operable at other airports which have not been particularized to simplify the representation.

As shown, it would be appreciated that applications of the respective carriers downloaded onto the plurality of terminals (the common use terminal equipment) **39a** may be in communication across the fixed network **38** with corresponding applications **35**, **36** operable on the server **34**. The relevant active server application will be determined by the identity of the carrier for the relevant terminal. This may be specified by authorised personnel logging into and initiating the session (either in assisted check-in operations or in self-service operation).

It would be appreciated that if the first carrier is providing a service, for a passenger who is being checked in via the terminal **39a**, the application operable on the server **34** may be the corresponding carrier application **35**, which may be in further communication with a corresponding carrier booking site or system which is typically remote from the relevant airport (not shown).

Similar arrangements would also be implemented for other carriers, and for the same carrier at other airports.

Hence, there may exist applications which are installed onto the equipment specific to each carrier, server applications operable on the airport servers and carrier applications operable at one or more locations of the carrier itself. Throughout this environment, there are numerous service providers in charge of certification and confirming that the applications **35**, **36** operable on the server **34** in the server room **32** at each airport (e.g. as depicted Hong Kong, Sydney, London and Tokyo) are able to co-exist; or if these applications are downloaded to terminals that such applications are operable on these terminals. For example, such applications and any modifications thereto may be certified as stable, so that they do not create memory leaks or another issue which could affect the performance or ability of the overall airport server **34**.

It would be appreciated that without the certification process, the possibility existed that the application **35**, **36** operating on the server **34** could interfere with each other, and thereby lead to failure of either or both application or the server itself. Alternatively, if an application was downloaded to a terminal, and there was no certification process in place, the application may not be able to operate the associated peripheral equipment of that terminal.

Accordingly, in order to use the equipment at each airport, the carrier application for that airport must be certified and confirmed to meet certain standards before being introduced into the common environment of the server **34**. Very often, the server environment may be a proprietary server or non-standard main frame environment with a high degree of customisation to the server utilised, and the application may be customised to equipment deployed at a particular airport. The need for individual certification of each application by each airport detracts from the ease of use and cross platform potential common use equipment could potentially have.

The complexity of the system, and need for certification, can lead to some difficulties in updating the applications **35**, **36**, the hardware **39a**, **39b**, or the "backend" booking systems of the carriers operable remotely from the airport due to the necessity for certification and delay associated with the process of certification. Additional costs are also incurred in the certification process, in the creation and monitoring of the customised server environment.

Accordingly, despite the potential advantages that such common use equipment can provide, the certification process for the applications and also hardware operable at each airport site introduces additional costs and delay in the introduction and updating of the common use equipment in the overall system.

Compounding interoperability issues is the situation that potentially different versions of carrier applications may be operable in different airports, causing versioning issues when these different versions interface with common carrier system(s) located geographically remote from an airport location.

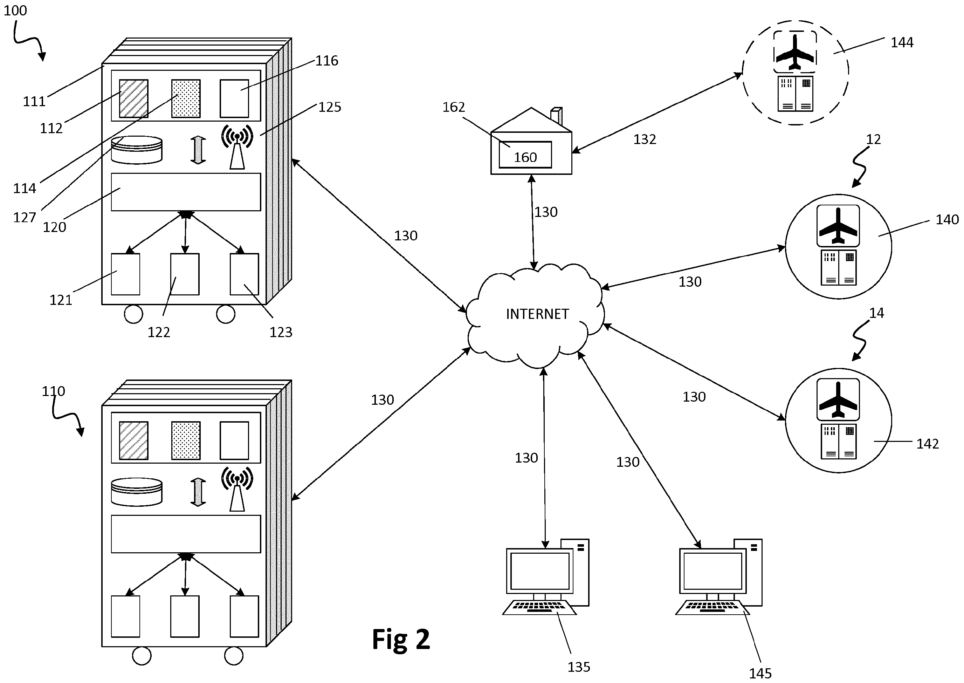

Referring now to the exemplary embodiment of the present disclosure depicted in Fig 2, there is a first plurality of kiosks **100** and a second plurality of kiosks **110**. (As shown, a plurality of kiosks are displayed as it is likely such would be deployed, although it would be appreciated that the disclosure would also include a single kiosk configured as described below).

As depicted, the first and second plurality of kiosks may be located at the same geographic location (on the same site, at the same airport; or may be located after different airports in different countries) without departing from the scope of the present disclosure. The first plurality of kiosks may be used by a first carrier and the second plurality by another or the same carrier at the same time. Kiosks in the first plurality and second plurality are also configured so that these kiosks may also be used by other carriers after passengers for a particular flight or train or bus at a specific date and time have been processed. In this way another carrier can use the kiosks to manage their passenger processes after the first carrier has finished their passenger operations with kiosks in the first and/or second plurality of kiosks.

It would also be appreciated that change from a first carrier having access to kiosks in the first or second plurality of kiosks may be performed incrementally or simultaneously. That is, as passengers of a first carrier are processed and the time for departure draws closer, fewer and fewer kiosks of the first and/or second plurality of kiosks may be allocated to that carrier, having been reallocated to another carrier or simply removed from operation. In this way the kiosks of the present disclosure allow for a dynamically scalable and responsive assignment based upon demand. This may be compared with the relatively inflexible prior art exclusive use allocations.

The kiosks include computers **111** on which a standard operating system 112 such as Unix, Windows™ Linux or similar may be operable, as well as internet browser software **114** such as Internet Explorer, Chrome, Opera, Safari or Firefox or other similar variants.

Software programs **112** and **114** as depicted provide an interface across the network link **130** to the corresponding carrier's passenger check-in system **140**, **142** which may be located geographically remote from the kiosk, and geographically remote from the airport. Advantageously, the applications may provide "Applets" or so called "thin client" applications operable on or within a standard web browser operating on the processor of the computer **111** of the kiosk. These applications may communicate across the network **130** via encrypted channels, exchanging passenger data and/or data objects with the remote passenger management systems **140**, **142** operated by a corresponding carrier. These remote systems may be in another location in the airport, in a different city, or even in a different country, without departing from the scope of the disclosure.

Advantageously, apart from the operating system and peripheral management configuration data/software, there is no requirement for passenger or booking data to be stored on memory or storage of the kiosk itself.

In another arrangement, also depicted in Fig 2, the application **116** may be a browser such as Internet Explorer, Chrome, Opera, Safari or Firefox or other similar variants configured to interact with a remote customer service application **162** on a server **160**. This application **162** may not be provided by a carrier, but provided by another party such as an airport. The remote customer service application may provide generic passenger management systems for carriers **144** who do not operate such applications, or who are not able to provide the full functionality of these applications. In this arrangement the kiosks may be configurable to interface directly with the generic passenger management system, with all aspects of the system provided via establishing a communication link **130** to an offsite server application **162** on a server **160**. The application may in turn establish connections with the some or none of the carrier applications depicted as remote sites **144**.

The following provides an example of how the system disclosed could operate. The first plurality of kiosks **100** may operate at one location such as Hong Kong Airport. Some of these kiosks at 5:00 pm on 15 October, 2016 may have programs **112**, **114** communicating across the network link 130 to the passenger management program of Carrier **140** (for example British Airways) operating on servers in the United Kingdom.

At the same time, other kiosks of the first plurality of kiosks may be running an application program **116** which is in communication across the network **130** with the offsite server application for **162** of Carrier **144** (e.g. Budget Air Express), operating on servers **160** located in Taiwan, or at a different location in Hong Kong.

After the respective flights have left, the first plurality of kiosks may be configured to be used exclusively by a third airline such as JAL, for their flight departing at 6:00 pm; configured in either of the above arrangements. Alternatively, JAL may only need to use some of the kiosks, with the remainder either not deployed or assigned to another carrier.

Each of the applications **112**, **114** or **116** (whether providing an interface to remote carrier passenger management applications hosted on carrier servers **140**, **142** (at whatever location they are sited) or to the "generic" application **162** hosted e.g. by an airport) may be arranged so as to communicate via communication interface and peripherals interface with a peripheral management layer **120** of the kiosk. The peripheral management layer **120** has a peripheral management interface which enables communication between the applications **112** and **114** and **116** and the attached equipment such as a baggage tag printer **121**, boarding pass printer **122**, a magnetic card reader (not shown) and a travel document/boarding pass reader **123**.

The arrangement of the peripheral layer in Fig 2 may be contrasted with the arrangement for peripheral management of the prior art, where aspects of the peripheral management are handled by the application and application developers within the application.

As would be expected, the prior art arrangement creates additional complexity and programming requirements for each carrier application which is responsible for more peripheral controls. The need for certification of this aspect in turn causes increased delay and cost in all aspects of the software lifecycle - including releasing, installing and updating. It would be appreciated that that this in turn leads to a proliferation of unique vendor specific platforms and implementation methodologies, which results in carriers managing multiple certifications for airports operating different platforms and equipment.

Advantageously, in the arrangement depicted in Fig 2, the reader **123** may be configured to detect printed indicia on tickets/booking receipts, mobile phones etc. which may be associated with a passenger booking record made by travel agent or passenger.

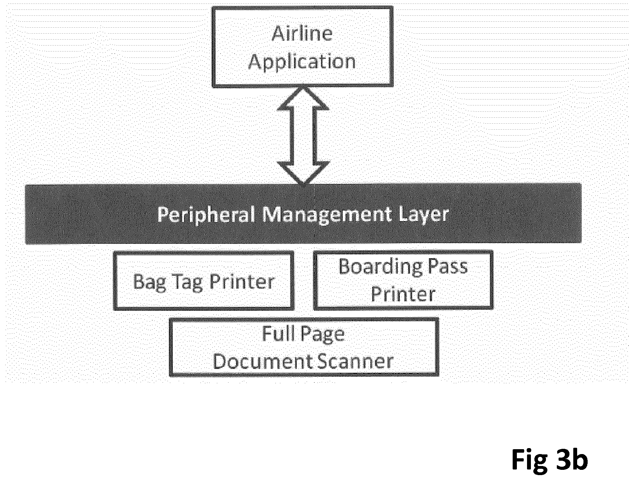

In this implementation, the peripheral management layer is configured so as to provide a peripheral management interface in the form of an application programming interface (API) to the equipment which is attached or provided in the kiosk. This is depicted in more detail with reference to Fig 3b.

In this way, the applications running above the peripheral management layer on a standard operating system have no customisation required for the specifics of the implementation of the shared equipment.

For example, all that is required for the application to print a boarding pass is to call the printer boarding pass routine, passing the appropriate information, and the user can expect that an appropriate boarding pass would be printed by the kiosk peripheral.

All of the subroutines, and print functionality of the associated peripheral would be managed by the peripheral management layer, operating together with the operating system, provided the appropriate parameters are passed from the calling application to the peripheral via the interface to the peripheral management layer.

In this way, the application needs only to have a very limited customisation for the specifics of the kiosk environment, with all of the peripheral management aspects handled by the peripheral management layer.

Similarly, and depicted in Fig 2 by reference numeral **125**, a wireless communications interface may be configured to provide a network access to any one of a number of appropriate end points.

This wireless interface **125** may be configured to provide an encrypted connection through an AES or SSL encryption or other similar encryption protocols without departing from the present disclosure.

Irrespective of whether the application interfaces with a remote system hosted by a carrier or the system hosted on an external server **160** is used, both the peripheral management layer and the wireless network interface operate to provide the services required, without the calling application needing any specific implementation details of the devices.

As depicted, the data store **127** represented in a Fig 2 would be capable of storing both the program instructions for peripheral control systems, as well as the operating system and interface/web browser software.

In an exemplary embodiment it would be appreciated that the application software may simply be a web browser interface which establishes communication with a remote passenger management system.

Advantageously, there may be included a terminal management server providing for management of the operation of the kiosk. This is depicted by terminal **135** for use by an airport location for logging overall system performance and provision of fault reports which may arise during the provision of the kiosk services.

Additionally, as depicted by terminal **145**, there may be a network computer system in communication with the plurality of kiosks for providing front line monitoring of faults, support calls, and other issues that may arise from the operation of the kiosks. This would be a more active, supervisory role, in which the integrity of the overall system may be monitored, and if necessary support arranged to deal with inevitable hardware faults, such as paper jams, lack of paper, peripheral malfunction, and general kiosk malfunction.

Alternatively, this terminal may be used for remote updates to one or more of the operating system, applications (including peripheral interface software) which operate on the kiosk.

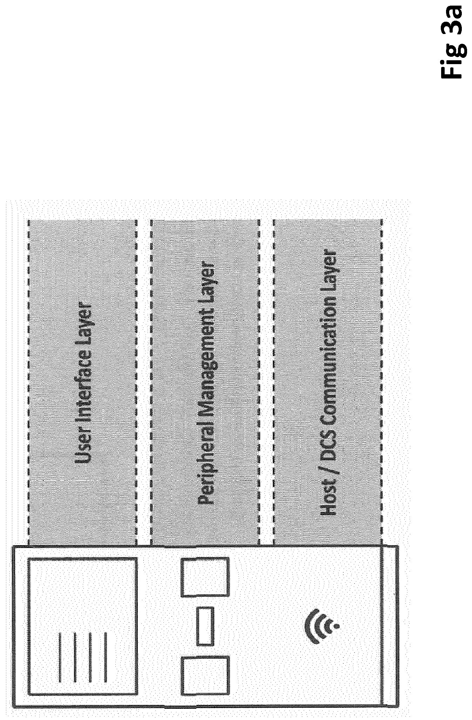

Advantageously, as depicted in Fig 3a, separation into functional layers enables the functions provided by the kiosk to be provided in stable, reliable, low cost passenger management systems which avoid the need for costly certification as depicted in the prior art system shown in Fig 1.

It would be appreciated that the abstraction of the functions provided by applications in the user interface layer, the peripheral functions in the peripheral management layer and the host/departure control system communication layer mean that the client side applications which may be provided by the respective carriers for operation on the kiosk can be feature rich, and platform independent.

In one arrangement the peripherals interface provides for control of the peripherals of the kiosk by a carrier application hosted remotely across a communications interface for communication with the authorised peripheral devices across a peripherals interface.

In a further arrangement, the authorised peripherals of the kiosk are configured to be operable even where the carrier application is hosted on the server **160** (for example for low budget airlines, which do not have a passenger management system located remotely, or do not wish to interface with this system at all airports) Thus, the present system is flexible enough such that where a carrier does not have their own application, (or if where the carrier does have their own application hosted on their own remote servers) control over the peripherals and other essential functionality can be provided in either configuration.

Fig 3b is a further representation of how the peripheral management layer of the kiosk and system of the present disclosure could be configured. As noted with reference to Fig 3b, the peripheral management layer is arranged so that the interfaced equipment may include a baggage tag printer, boarding pass printer, and a travel document/boarding pass reader. Advantageously these could selected from commonly available "off-shelf" peripherals available from the open market.

The peripherals are thus able to be controlled by communicating with the carrier application executing either on the carrier application hosted remotely by the carrier, or by the application hosted on the server **160**. The communications interface of the kiosk establishes the communications across the network, whilst the peripheral management interface provides abstraction for the plurality of authorised peripherals attached to the kiosk.

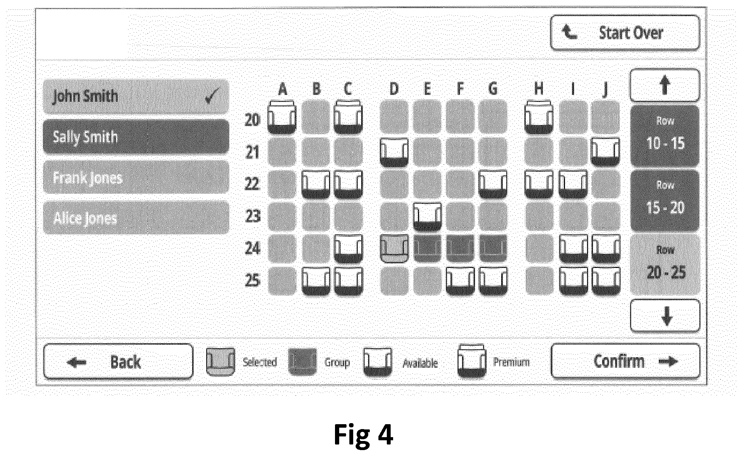

Referring to Fig 4, an exemplary embodiment of the seating re-allocation screen which may form part of an on-site passenger management system (specifically a common use self-service application) is displayed on an exemplary kiosk. It would be appreciated that this interface could either reflect the web interface provided by one or more of the carrier applications which are hosted remotely, or the interface provided by the application hosted on the server **160**.

If the latter is the case, it would be appreciated that the indicia on the top left of the screen could be customized according to whichever carrier is using the application.

It would be appreciated by persons skilled in the art that the system and kiosk of the present disclosure may be operable in either agent assisted or in passenger operated modes.

Advantageously, in some embodiments of the present disclosure, an automated document check feature may be provided. In respect of this aspect, there could be provided a facility for retrieving passenger information from a provided travel document, accessing across the network **130** a verification server such as the Travel docs™ or Timatic™ system or similar, enabling the passenger nationality and destination to be verified according to visa status.

This is an important advantage provided by the kiosk and system of the present disclosure, which is not present in prior art arrangements.

The provided travel document may be captured by the scanner/ retrieved from booking records based upon voucher information or other passenger identifying information depending on the specific implementation utilised. The kiosk may be operated in an agent assisted mode or in a passenger operated mode; or a combination of both as is discussed in more detail.

It would be appreciated that in the agent operated mode, additional functionality may be presented as compared to the passenger operated mode. For example, in the agent operated mode, the agent may be able to act upon special requests from passengers such as rebooking on flights, changing meal preferences, upgrading seat class etc; functions which may not be available when in the passenger operated mode.

For example, assume Mr Jones is a British citizen, travelling to China, and needs a visa under the current legislative requirements for British citizens travelling to China.

If Mr Jones is operating the kiosk, the system upon detecting the nationality of the user's identified travel document, checking with the server to determine that a visa is required for passengers in this situation, may then be configured to request Mr Jones to proceed to manual check in; or the system may request an agent verify the requisite China travel visa is in his passport.

Further to the example above, if Mr Jones is travelling to the United Kingdom, and presents his United Kingdom citizen's passport, then he is allowed to proceed with the check in process, with no assistance required from an agent.

In this way, based upon the nationality identified for the user's travel document, and the destination of the user in question, the airline can ensure that their front line staff ensure passengers have the appropriate travel documents/visa for relevant destinations.

It would be appreciated that the check in kiosk could be configured so as to be operable by a passenger, and the same or an additional kiosk operated at a subsequent stage (e.g. to allow verification of travel documents) by authorised personnel. Thus, it would be appreciated by persons skilled in the art that the kiosk may be configured to provide agent assisted or self- check-in operations.

Advantageously, the integration of both functions of check-in and travel document verification will improve the overall passenger experience. With the potential for fully automatic document checking that this aspect of the disclosure provides, it is possible that many passengers may not even be aware that such a document check is being carried out; as compared to the existing manual process where to manage carrier/airport responsibility for all passengers travel documents all passengers must be checked.

Accordingly, in the embodiment of the present disclosure described there is provided a kiosk, which operates in a plurality of modes. The kiosk is able to provide a communication with remote passenger management system(s) of a plurality of carriers, as well as providing communication with a standalone system which may be hosted by the kiosk provider (such as an airport) or another third party on behalf of one or many carriers (such as low cost airlines).

Advantageously, the kiosk of the present disclosure is mobile, with communications mediated by a wireless communications interface, and power supplied by on board battery or batteries. This removes the need for expensive connections, including power and fixed network cables, which restrict the location of the kiosk to a static location and configuration. However, at the same time, the kiosk may be adapted to recharge the battery and/or operate from a standard power supply plug.

By connecting mobile, scalable and portable kiosks with appropriate applications for providing a passenger management system, the spatial configuration of the check in kiosks and their overall arrangement may be modified according to seasonal demands. Potentially, a "check-in" kiosk of the type described may not necessarily even be located at the airport or other passenger terminal, and instead may be located at a site upstream or before this destination (for example, a railway station or hotel, or even on a train to the airport itself).

Additionally, by avoiding the need for robust certification systems or private clouds, the system and network of the present disclosure provided for a lean, scalable and reliable and stable solution to managing passengers, including managing passenger management systems for a transportation facility such as an airport.

Providing the capacity for the kiosk to form a direct network connection with a carrier's passenger management system using a web interface on a browser, the airport/carrier IT staff time and involvement in the configuration and set up of the system is significantly reduced.

Avoiding the costs associated with certification and potential delays, advantageously this disclosure teaches a cost effective and stable way for carriers to manage their applications across multiple airports - thereby achieving a synergy as multiple airports deploy kiosks of the present disclosure.

It would be appreciated that in whichever way of operation of the kiosks, updates to the peripheral management layer could be readily "pushed" out to terminals. In addition, any changes to the actual check-in or passenger management system is able to be made instantly accessible across the network (in the case of providing an interface for communication with a remote application) or by updating the "generic" carrier application hosted by the kiosk or airport provider.

Furthermore, the capacity to manage the applications either remotely or centrally means that versioning issues which are common in either of the prior art implementations discussed do not arise. This in turn leads to more efficiency and reliability for the carriers operating the applications.

Advantageously, this kiosk and system of the present disclosure can run on standard operating systems, using the standard peripherals which have been verified by an appropriate authority (such as the AEA) etc.; and for communication across secured or unsecured public networks. By way of non-limiting example, it would be appreciated that the kiosk and system could operate on a Windows™ or Linux, Unix, Mac OS operating system or some variant thereof.

Accordingly, the present disclosure provides a significant advance in facilities offered, providing increased mobility, passenger travel eligibility verification, multi-platform, multi-carrier support and abstraction of the specific technical implementation for the wireless and peripheral management. Accordingly, the present disclosure provides a robust, scalable, and clever solution to the problems of the private networks, certification requirements and specialised server environments and systems of the prior art.

As will be appreciated, although the power provided to the embodiments are depicted would typically be power sources such as batteries cells, other or alternate power sources may also be provided.

While the present disclosure has been explained by reference to the examples or preferred embodiments described above, it will be appreciated that those are examples to assist understanding of the present disclosure and are not meant to be restrictive. Variations or modifications which are obvious or trivial to persons skilled in the art, as well as improvements made thereon, will also be covered by the present disclosure.

## Claims

1. A passenger check-in kiosk operable by any one of a plurality of carriers, the kiosk comprising:
a processor of a computing device configured for execution of an operating system and for controlling at least one of a plurality of authorised peripheral devices;
wherein upon selection of any one carrier from the plurality of carriers, the processor is configured to provide an interface for communication with the corresponding carrier application executing on a device remote from the passenger check-in kiosk; and
a memory for storing parameters for operation of the authorised peripheral devices and operating system.

2. The passenger check-in kiosk according to claim 1 wherein the passenger check in kiosk is mobile.

3. The passenger check-in kiosk according to claim 1 wherein a secure wireless communication channel is established between the processor and the corresponding carrier application executing on a device remote from the passenger check-in kiosk.

4. The passenger check-in kiosk according to claim 1 wherein the kiosk further comprises a communications interface for communication with a centralised terminal management server for monitoring the authorised peripheral devices.

5. The passenger check-in kiosk according to claim 1 wherein the authorised peripheral device is selected from the group comprising a baggage tag printer, a bar code reader, a passport scanner, a magnetic card reader and a boarding pass printer.

6. The passenger check-in kiosk according to claim 1 wherein the processor of the kiosk is configured to receive passenger information and initiate a connection with an authorised server for confirming the passenger's travel clearance, wherein preferably the authorised server confirms the visa requirements of the passenger based upon the country of origin of a provided passenger travel document and the passenger destination.

7. The passenger check-in kiosk according to claim 1 wherein the processor is configured to display indicia representing a carrier brand corresponding to the passenger booking information.

8. The passenger check-in kiosk according to any one of the preceding claims operable by a passenger or by an authorised agent.

9. The passenger check-in kiosk according to claim 1 wherein the memory stores a standard operating system selected from the group comprising Windows®, Linux, Mac OS and UNIX.

10. The passenger check-in kiosk according to claim 1 wherein the interface is configured to establish communication with an instance of a corresponding remote default carrier application wherein the remote default carrier application is potentially configurable by any one of the plurality of carriers.

11. The passenger check-in kiosk according to claim 1 wherein the kiosk is connectable to one or more power sources comprising an on-board battery, and an external power network.

12. The passenger check-in kiosk according to claim 1 wherein the kiosk further comprises a peripherals communication interface connected to the authorised peripheral devices for intermediating communication between the authorised peripheral devices and the corresponding carrier application.

13. A passenger management system operable on a server located remote from a plurality of passenger check-in kiosks, the system comprising:
a communications interface configured for providing communication across one or more open networks with the passenger check-in kiosks,
a processor configured for executing a default passenger check in application and selected customisation parameters wherein upon receiving from a passenger check in kiosk via the communications interface data identifying a passenger or passenger booking and verification of passenger booking information, the processor is configured to transmit authorisation to the remote passenger check-in kiosk via the communications interface for printing of a boarding pass or bag tag.

14. The passenger management system of claim 13 wherein upon receiving data from the kiosk, a connection is initiated with an authorised server for confirming the passenger's travel clearance wherein preferably the authorised server confirms the visa requirements of the passenger based upon the country of origin of the passenger travel document and passenger destination information provided.

15. A system for managing check-in operations for a plurality of passengers of a plurality of carriers departing from a transportation facility, the system comprising:
at least one kiosk operable by any of a plurality of carriers, the kiosk comprising a processor of a computing device configured for execution of an operating system and controlling at least one of a plurality of authorised peripheral devices; wherein upon selection of one carrier from the plurality of carriers, the processor is configured to provide an interface for communication with a corresponding carrier application executing on a device remote from the passenger check-in kiosk; and a memory for storing parameters for operation of the authorised peripheral devices and the operating system;
one or more computing devices including processors configured for receiving from a passenger check in kiosk data identifying a passenger or passenger booking located remotely from the kiosk, wherein the processors are configured such that upon verification of the provided passenger data against passenger booking information at the remote carrier application, authorisation is transmitted to the remote passenger check in kiosk for printing of at least one of a boarding pass or bag tag.
